# FASCICULE DE BREVET EUROPEEN

(11) **EP 4 508 349 B1**
(45) Date de publication et mention de la délivrance du brevet: **31.12.2025**
(21) Numéro de dépôt: 23717181.4
(22) Date de dépôt: 06.04.2023
(51) Int. Cl.: F16K 31/04, F16K 31/53, F16K 37/00, H02K 7/116, H02K 11/21, H02K 11/40, G01D 3/08, G01D 5/14

(54) **ACTIONNEUR ÉLECTROMÉCANIQUE**
ELEKTROMECHANISCHER AKTUATOR
ELECTROMECHANICAL ACTUATOR

(30) Priorité: 12.04.2022 FR 2203372
(43) Date de publication de la demande: 19.02.2025
(73) Titulaire: Valeo Powertrain GmbH, 96106 Ebern (DE)
(72) Inventeur: RIBERA, Frédéric, 95892 CERGY PONTOISE (FR); LALLEMANT, Mathieu, 95892 CERGY PONTOISE (FR); MOREAU, Stéphane, 95892 CERGY PONTOISE (FR); DOGHMANE, Mohamed Yacine, 95892 CERGY PONTOISE (FR)
(74) Mandataire: Valeo Powertrain Systems
(86) Numéro de dépôt international: PCT/EP2023/059151
(87) Numéro de publication internationale: WO 2023/198595

(56) Documents cités:
- US-A1- 2004 135 574
- US-A1- 2013 160 738
- US-A1- 2014 111 193
- US-A1- 2015 229 084
- US-A1- 2016 218 601

## Description

L'invention concerne notamment un actionneur électromécanique avec un capteur de position.

L'actionneur peut être du type vanne électromécanique ou tout autre type d'actionneur électromécanique comprenant un capteur. Dans le cas d'une vanne électromécanique, celle-ci peut être agencée pour gérer un flux gazeux vers ou depuis un moteur de véhicule.

La demande de brevet US2013160738 décrit un ensemble papillon pour fournir une aspiration contrôlée à un moteur, comprenant un capteur de position. Une connexion électrique entre le capteur de position et le corps du papillon est prévue pour former un chemin de décharge électrique entre le capteur de position et le boîtier de corps de papillon. Ces décharges électriques peuvent survenir lorsqu'en présence d'électricité statique générée par un flux d'air à travers l'ensemble de corps de papillon, le contact d'une personne s'occupant de l'entretien du moteur provoque une décharge vers le capteur, ce qui peut potentiellement endommager ce capteur. La demande de brevet US2014/111193A1 décrit un actionneur selon le préambule de la revendication 1.

L'invention vise à améliorer encore la protection d'un capteur contre des décharges électriques potentielles indésirables.

L'invention a ainsi pour objet un actionneur électromécanique comprenant :
- un élément conducteur sensible à partir duquel se forme de manière privilégiée un arc électrique indésirable issu notamment d'électricité statique,
- un capteur, notamment un capteur de position agencé pour détecter une position d'un organe mobile de l'actionneur, qui est par exemple un volet mobile, ce capteur comprenant une languette électriquement conductrice de sortie fonctionnelle à protéger et connectée à un barreau conducteur de sortie fonctionnelle, et une languette de masse connectée à un barreau de masse, la languette de sortie prolongée de son barreau de sortie s'étendant entre, d'une part, la languette de masse prolongée de son barreau de masse et, d'autre part, l'élément conducteur sensible,
- un chemin de protection électrique agencé pour dévier une éventuelle décharge électrique de l'arc électrique provenant de l'élément conducteur sensible vers la languette de masse de sorte à éviter que cette décharge n'atteigne la languette de sortie et traverse l'intérieur du capteur,
- un jeu entre le chemin de protection et l'élément conducteur sensible.

Dans la présente invention, on appelle élément sensible un élément conducteur sensible à partir duquel se forme de manière privilégiée un arc électrique indésirable issu notamment d'électricité statique. On comprend de ce qui précède, que le qualificatif de « sensible » doit être lu en association avec le reste de la caractéristique « conducteur sensible à partir duquel se forme de manière privilégiée un arc électrique indésirable issu notamment d'électricité statique ». Ledit élément conducteur est dit « sensible » dans la mesure où c'est à partir de lui que peut se former de manière privilégiée un arc électrique indésirable.

Le terme « de manière privilégiée » désigne un endroit de l'actionneur où se forme une décharge électrique de manière privilégiée par rapport à d'autres parties de l'actionneur. Notamment l'élément sensible peut présenter une forme d'arbre propice à la génération de décharges électriques.

Le barreau précité est encore appelé *« lead frame* » en anglais.

La présence du jeu, et non un contact direct, permet également de ne pas court-circuiter la protection CEM (compatibilité électromagnétique) du client qui va intégrer l'actionneur. De préférence, le jeu est un jeu d'air. De manière alternative, le jeu peut comprendre un isolant qui est non conducteur en fonctionnement normal c'est-à-dire sans la présence de décharge électrique et qui devient conducteur en présence de décharge électrique, par exemple supérieure à 10000V.

Le jeu précité, non nul, est notamment compris entre 0,5 mm et 2 mm, étant d'environ 1 mm.

Ainsi, par exemple, l'élément conducteur sensible et le chemin de protection sont séparés d'une distance inférieure à 1 mm.

L'invention permet, grâce au chemin de protection, de forcer la décharge électrique à passer préférentiellement par ce chemin de protection, à la place d'un chemin indésirable qui inclurait des broches de connexion électriques vers un moteur et des barreaux, ou *« leadframes »* en anglais, qui dirigeraient la décharge vers l'intérieur du capteur.

Dans l'invention, le ou les jeux d'air cumulés qui sont présents sur le chemin de protection sont plus faibles que les jeux d'air cumulés qui sont présents sur le chemin indésirable, rendant le chemin de protection privilégié pour la décharge. L'invention permet ainsi de protéger le capteur contre des décharges susceptibles de l'endommager. Ces décharges peuvent survenir, par exemple, de cas de fortes accumulations d'électricité statique sur l'actionneur.

Selon l'un des aspects de l'invention, l'actionneur comprend un capot, notamment réalisé en matière plastique, sur lequel sont placés le capteur et le chemin de protection électrique.

Selon l'un des aspects de l'invention, le capot est agencé pour être fixé sur un corps en matériau électriquement conducteur, notamment en métal, qui loge l'organe mobile.

Grâce à l'invention, on évite que de l'électricité statique puisse se décharger depuis ce corps en métal vers le capteur.

Selon l'un des aspects de l'invention, l'élément conducteur sensible est un arbre intermédiaire qui porte un pignon intermédiaire d'un mécanisme d'actionnement de l'organe mobile.

Selon l'un des aspects de l'invention, le chemin de protection comprend un ou plusieurs barreaux de protection conducteurs supplémentaires.

Selon l'un des aspects de l'invention, ce ou ces barreaux sont non en contact avec l'élément conducteur sensible.

Selon l'un des aspects de l'invention, ce ou ces barreaux de protection conducteurs sont noyés, au moins sur une partie de leur longueur, dans une matière du capot.

Selon l'un des aspects de l'invention, le capteur comprend un organe de masse, notamment une patte de masse, agencée pour être reliée à une masse et le chemin de protection est couplé à cet organe de masse via un jeu de sorte que la décharge puisse s'évacuer depuis le chemin de protection vers cet organe de masse en franchissant le jeu. Ce jeu peut également être un jeu d'air. De manière alternative, le jeu peut comprendre un isolant qui est non conducteur en fonctionnement normal c'est-à-dire sans la présence de décharge électrique et qui devient conducteur en présence de décharge électrique, par exemple supérieure à 10000V

Cette configuration est avantageuse lorsque le capteur comprend un organe de masse aisément accessible, connecté à la languette de masse du capteur.

Le jeu précité, non nul, est notamment compris entre 0,5 mm et 2 mm, étant d'environ 1 mm.

Dans ce cas, aucun barreau de protection n'est en contact avec le barreau de masse liée au capteur.

Notamment le barreau de protection présente une forme qui fait le tour du capteur de sorte que l'une des extrémités libres de ce barreau de protection aboutisse en regard d'un côté du capteur opposé au côté qui comprend la languette de sortie fonctionnelle.

La décharge électrique est évacuée par l'organe de masse présent sur le capteur, puis à travers la languette de masse du capteur, prolongée par le barreau de masse enterré.

Lorsque le capteur ne comprend pas d'organe de masse aisément accessible et qui soit connecté à la languette de masse du capteur, il est possible de prévoir que le chemin de protection soit en contact électrique avec la languette de masse du capteur ou le barreau de masse qui est connectée à cette languette de masse.

Dans ce cas, le chemin de protection ne transite pas par le capteur et la décharge s'évacue directement dans le conducteur connecté à la masse, situé dans le capot.

Dans cet exemple de mise en œuvre de l'invention, le chemin de protection peut comprendre un barreau de protection en contact électrique avec le barreau de masse liée au capteur. Les barreaux ou « *leadframes »* de protection et de mise à la masse peuvent former un conducteur unique dans ce cas.

Encore dans cet exemple de mise en œuvre de l'invention, le chemin de protection peut comprendre au moins un barreau qui s'étend sous le capteur, à distance de ce capteur.

Selon l'un des aspects de l'invention, le chemin de protection comprend un barreau de protection unique.

Selon l'un des aspects de l'invention, ce barreau de protection présente au moins un ou plusieurs coudes reliant des portions droites du barreau.

Selon l'un des aspects de l'invention, le barreau conducteur de sortie et le barreau de masse reliés aux languettes du capteur sont noyés au moins sur une partie de leur longueur dans la matière, notamment plastique, du capot.

Selon l'un des aspects de l'invention, l'élément sensible est placé en regard du barreau de protection, notamment d'une extrémité de ce barreau de protection.

Selon l'un des aspects de l'invention, le capot comprend deux broches électriques pour réaliser une connexion électrique entre un moteur électrique associé à l'actionneur électromécanique et une source d'alimentation électrique, notamment de courant continu.

Selon l'un des aspects de l'invention, ces broches sont logées chacune dans une colonnette du boîtier, notamment une colonnette venant de matière avec le reste du capot et s'étendant dans une concavité du capot.

Selon l'un des aspects de l'invention, ces broches sont chacune prolongée par un barreau conducteur débouchant dans un organe de connexion électrique du capot agencé pour assurer des liaisons électriques avec des câbles électriques externes à l'actionneur, par exemple pour l'alimentation électrique d'un moteur électrique de l'actionneur ou pour des échanges d'informations fournies par le capteur.

Selon l'un des aspects de l'invention, cet organe de connexion comprend une paroi tubulaire, notamment venant de matière avec le reste du capot, avec des extrémités de barreaux de connexion électrique au sein de cette paroi tubulaire.

Selon l'un des aspects de l'invention, le capot comprend une cavité recevant le capteur.

Selon l'un des aspects de l'invention, le capteur comprend une pluralité de languettes de connexion électrique, dont la languette de sortie fonctionnelle et la languette de masse, ces languettes étant connectées aux barreaux conducteurs associés et ces languettes du capteur étant noyées, au moins à leur raccordement avec les barreaux, dans une résine déposée sur une face du capot.

Selon l'un des aspects de l'invention, ces languettes sont toutes sur un côté du capteur.

Selon l'un des aspects de l'invention, l'actionneur précité forme une vanne électromécanique, notamment de type papillon.

L'invention pourra être mieux comprise à la lecture de la description qui va suivre, d'exemples non limitatifs de mise en œuvre de celle-ci et à l'examen des dessins annexés sur lesquels :
- la [Fig. 1] représente, schématiquement et partiellement, une vanne électromécanique selon un exemple de mise en œuvre de l'invention ;
- la [Fig. 2] représente, schématiquement et partiellement, une vue en perspective d'un capot de la vanne de la figure 1 ;
- la [Fig. 3] représente, schématiquement et partiellement, un capteur et le chemin de protection équipant le capot de la figure 2 ;
- la [Fig. 4] représente, schématiquement et partiellement, un chemin de protection selon un autre exemple de mise en œuvre de l'invention ;
- la [Fig. 5] représente, schématiquement et partiellement, le chemin de protection de la figure 4 suivant une vue de côté.

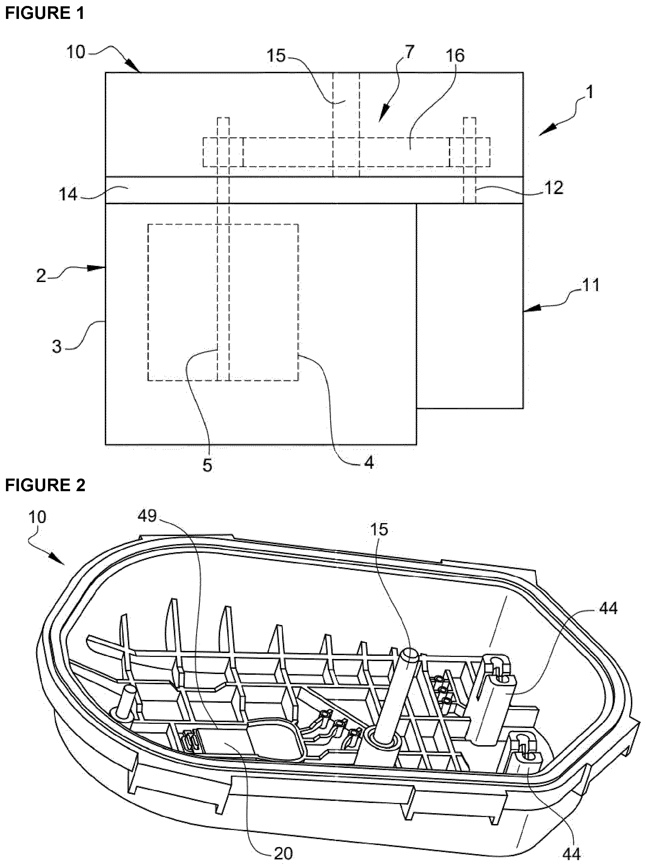

La figure 1 représente un actionneur électromécanique 1 formant une vanne électromécanique, qui comprend un module à vanne 2 comprenant un corps métallique 3 et un organe mobile 4, ici un volet de type papillon, qui est lié à un arbre rotatif 5, un mécanisme d'actionnement 7 de l'organe mobile 4 porté par une platine 14 et logé dans un capot 10, un moteur électrique 11 avec un arbre moteur 12 agencé pour actionner le mécanisme d'actionnement 7, un arbre intermédiaire 15 qui porte un pignon intermédiaire 16 du mécanisme d'actionnement 7.

Comme on peut le voir sur la figure 2, l'actionneur électromécanique 1 comprend en outre l'arbre intermédiaire 15 qui forme un élément conducteur sensible à partir duquel se forme de manière privilégiée un arc électrique indésirable issu d'électricité statique, un capteur de position 20 agencé pour détecter la position de l'organe mobile 4, ce capteur 20 comprenant une languette électriquement conductrice de sortie fonctionnelle 21 à protéger et connectée à un barreau conducteur de sortie fonctionnelle 22, et une languette de masse 23 connectée à un barreau de masse 24, la languette de sortie 21 prolongée de son barreau de sortie 22 s'étendant entre, d'une part, la languette de masse 23 prolongée de son barreau de masse 24 et, d'autre part, l'élément conducteur sensible 15, un chemin de protection électrique 25 agencé pour dévier une éventuelle décharge électrique de l'arc électrique provenant de l'élément conducteur sensible 15 vers la languette de masse 23 de sorte à éviter que cette décharge n'atteigne la languette de sortie 21 et traverse l'intérieur du capteur 20, un jeu d'air 27 entre ce chemin de protection 25 et l'élément conducteur sensible 15.

Les barreaux 22 et 24 sont encore appelés *« lead frame »* en anglais.

Le jeu d'air 27, non nul, est notamment compris entre 0,5 mm et 2 mm, étant d'environ 1 mm ou légèrement inférieur.

L'invention permet, grâce au chemin de protection 15, de forcer la décharge électrique à passer préférentiellement par ce chemin de protection 15.

Le capot 10, réalisé en matière plastique par moulage, porte le capteur 20 et le chemin de protection électrique 25.

Ce capot 10 est agencé pour être fixé sur la platine 14 du corps 3.

Le chemin de protection 25 comprend un barreau de protection conducteur supplémentaire 28 qui n'est pas en contact avec l'élément conducteur sensible 15.

Ce barreau de protection conducteur 28 est noyé, au moins sur une partie de sa longueur, dans la matière plastique du capot 10.

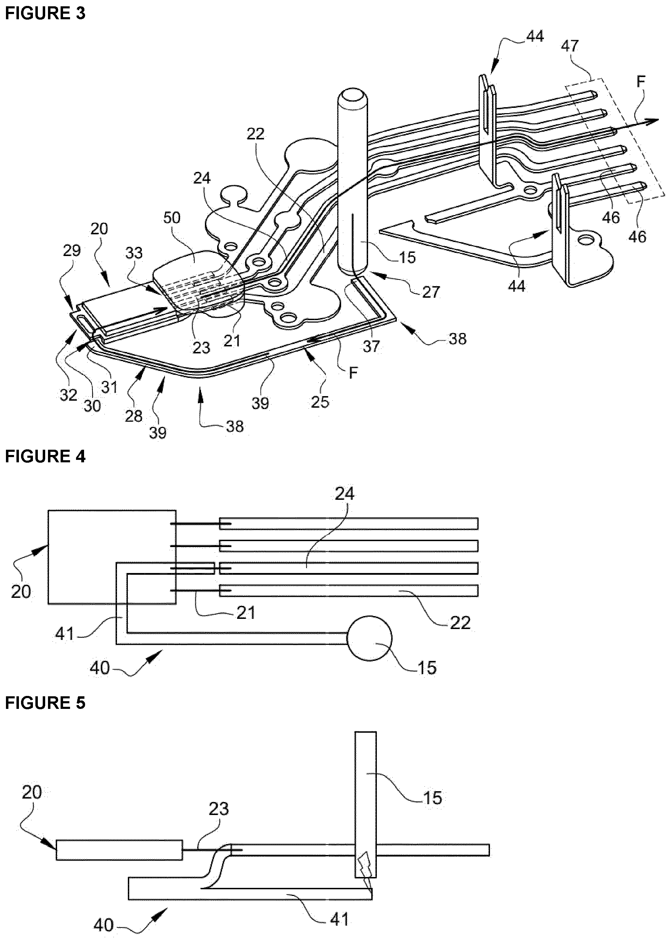

Comme bien visible sur la figure 3, le capteur 20 comprend un organe de masse 29, ici une patte de masse, agencée pour être reliée à une masse et le chemin de protection 25 est couplé à cet organe de masse 29 via un jeu d'air 30 de sorte que la décharge puisse s'évacuer depuis le chemin de protection 25 vers cet organe de masse 29 en franchissant le jeu d'air 30.

Cette configuration est avantageuse lorsque le capteur comprend un organe de masse 29 aisément accessible, connecté à la languette de masse 23 du capteur 20.

Le jeu d'air 30, non nul, est notamment compris entre 0,5 mm et 2 mm, étant d'environ 1 mm.

Le barreau de protection 28 n'est pas en contact avec le barreau de masse 24 liée au capteur.

Le barreau de protection 28 présente une forme qui fait le tour du capteur 20 de sorte que l'une des extrémités libres 31 de ce barreau de protection 28 aboutisse en regard d'un côté 32 du capteur 20 opposé au côté 33 qui comprend la languette de sortie fonctionnelle 21 ainsi que les autres languettes du capteur 20.

Le barreau de protection 28 présente un ou plusieurs coudes 38 reliant des portions droites 39 du barreau.

La décharge électrique est évacuée par l'organe de masse 29 présent sur le capteur 20, puis à travers la languette de masse 23 du capteur 20, prolongée par le barreau de masse 24 enterré. Le chemin de décharge est matérialisé par des flèches F sur la figure 3.

Le barreau conducteur de sortie 22 et le barreau de masse 24 reliés aux languettes 21 et 23 du capteur 20 sont noyés au moins sur une partie de leur longueur dans la matière plastique du capot 10.

L'élément sensible 15 est placé en regard d'une extrémité 37 de ce barreau de protection 28.

Le capot 10 comprend deux broches électriques 44 pour réaliser une connexion électrique entre le moteur électrique 11 et une source d'alimentation électrique, notamment de courant continu.

Ces broches 44 sont logées chacune dans une colonnette 45 du boîtier 10 qui s'étend dans une concavité du capot 10.

Ces broches 44 sont chacune prolongée par un barreau conducteur 46 débouchant dans un organe de connexion électrique 47 du capot 10 agencé pour assurer des liaisons électriques avec des câbles électriques externes à l'actionneur 1, pour l'alimentation électrique du moteur électrique 11 de l'actionneur ou pour des échanges d'informations fournies par le capteur 20.

Cet organe de connexion 47 comprend une paroi tubulaire venant de matière avec le reste du capot 10, avec des extrémités de barreaux de connexion électrique au sein de cette paroi tubulaire.

Le capot 10 comprend une cavité 49 recevant le capteur 20.

Le capteur 20 comprend une pluralité de languettes de connexion électrique, dont la languette de sortie fonctionnelle 21 et la languette de masse 23, et ces languettes du capteur sont noyées, au moins à leur raccordement avec les barreaux, dans une résine 50 déposée sur une face du capot 10.

Lorsque le capteur 20 ne comprend pas d'organe de masse aisément accessible et qui soit connecté à la languette de masse du capteur 20, il est possible de prévoir qu'un chemin de protection 40 soit en contact électrique avec la languette de masse 23 du capteur ou le barreau de masse 24 qui est connectée à cette languette de masse 23, comme illustré sur les figures 4 et 5.

Dans ce cas, le chemin de protection 40 est à distance du capteur 20 et la décharge s'évacue sans passer sur la masse du capteur 20.

Dans cet exemple de mise en œuvre de l'invention, le chemin de protection 40 comprend un barreau de protection 41 en contact électrique avec la languette de masse 23 ou le barreau de masse 24 liée au capteur 20.

Le barreau de protection 41 s'étend sous le capteur 20, à distance de ce capteur, comme visible sur la figure 5. Ce barreau 41 peut comprend une forme adaptée pour passer sous le capteur 20 et remonter pour connecter la languette de masse 23 ou le barreau de masse 24.

## Revendications

1. Actionneur électromécanique (1) comprenant :
- un élément conducteur sensible (15) à partir duquel se forme de manière privilégiée un arc électrique indésirable issu notamment d'électricité statique,
- un capteur (20), notamment un capteur de position agencé pour détecter une position d'un organe mobile de l'actionneur, qui est par exemple un volet mobile (4), ce capteur comprenant une languette électriquement conductrice de sortie fonctionnelle (21) à protéger et connectée à un barreau conducteur (22) de sortie fonctionnelle, et une languette de masse (23) connectée à un barreau de masse (24), la languette de sortie prolongée de son barreau de sortie s'étendant entre, d'une part, la languette de masse prolongée de son barreau de masse et, d'autre part, l'élément conducteur sensible, l'actionneur électromécanique (1) étant **caractérisé en ce qu'**il comprend:
- un chemin de protection électrique (25) agencé pour dévier une éventuelle décharge électrique de l'arc électrique provenant de l'élément conducteur sensible (15) vers la languette de masse (23) de sorte à éviter que cette décharge n'atteigne la languette de sortie et traverse l'intérieur du capteur (20),
- un jeu (27) entre le chemin de protection (25) et l'élément conducteur sensible (15).

2. Actionneur selon la revendication précédente, comprenant un capot (10), notamment réalisé en matière plastique, sur lequel sont placés le capteur (20) et le chemin de protection électrique (25).

3. Actionneur selon la revendication précédente, dans lequel le capot (10) est agencé pour être fixé sur un corps en matériau électriquement conducteur (3), notamment en métal, qui loge l'organe mobile.

4. Actionneur selon l'une des revendications précédentes, dans lequel l'élément conducteur sensible (15) est un arbre intermédiaire qui porte un pignon intermédiaire (16) d'un mécanisme d'actionnement (7) de l'organe mobile.

5. Actionneur selon l'une des revendications précédentes, dans lequel le chemin de protection (25 ; 40) comprend un ou plusieurs barreaux de protection conducteurs supplémentaires (28 ; 41).

6. Actionneur selon l'une des revendications précédentes, dans lequel le capteur (20) comprend un organe de masse (29), notamment une patte de masse, connecté à la languette de masse (23) et le chemin de protection (25) est couplé à cet organe de masse via un jeu (30) de sorte que la décharge puisse s'évacuer depuis le chemin de protection (25) vers cet organe de masse en franchissant le jeu (30).

7. Actionneur selon l'une des revendications 1 à 5, dans lequel le chemin de protection (40) est en contact électrique avec la languette de masse ou le barreau de masse qui est connectée à cette languette de masse.

8. Actionneur selon la revendication précédente, dans lequel le chemin de protection (40) comprend un barreau de protection (41) en contact électrique avec le barreau de masse liée au capteur.

9. Actionneur selon l'une des revendications 2 à 8, dans lequel le capot comprend deux broches électriques (44) pour réaliser une connexion électrique entre un moteur électrique (11) associé à l'actionneur électromécanique et une source d'alimentation électrique, notamment de courant continu.

10. Vanne électromécanique, notamment de type papillon , comprenant un actionneur selon l'une des revendications précédentes.

## Patentansprüche

1. Elektromechanischer Aktuator (1) mit:
- einem leitfähigen Sensorelement (15), an dem bevorzugt ein unerwünschter Lichtbogen entsteht, der insbesondere durch statische Elektrizität verursacht wird,
- einem Sensor (20), insbesondere einem Positionssensor, der dazu dient, die Position eines beweglichen Teils des Aktuators zu erfassen, beispielsweise einer beweglichen Klappe (4), wobei dieser Sensor eine elektrisch leitende Funktionsausgangslasche (21) umfasst, die geschützt werden muss und mit einer leitenden Funktionsausgangsstange (22) verbunden ist, sowie eine Masselasche (23), die mit einer Massestange (24) verbunden ist, wobei sich die Verlängerung der Ausgangslasche von ihrem Ausgangsstab zwischen der Verlängerung der Masselasche von ihrem Massestab einerseits und dem empfindlichen leitenden Element andererseits erstreckt, wobei der elektromechanische Aktuator (1) **dadurch gekennzeichnet ist, dass** er umfasst:
- einen elektrischen Schutzpfad (25), der so angeordnet ist, dass er eine mögliche elektrische Entladung des Lichtbogens vom empfindlichen leitenden Element (15) zur Erdungslasche (23) umleitet, um zu verhindern, dass diese Entladung die Ausgangslasche erreicht und das Innere des Sensors (20) durchquert,
- ein Spiel (27) zwischen dem Schutzpfad (25) und dem empfindlichen leitenden Element (15).

2. Aktuator nach dem vorherigen Anspruch, der eine Abdeckung (10) umfasst, die insbesondere aus Kunststoff besteht und auf der der Sensor (20) und der elektrische Schutzpfad (25) angeordnet sind.

3. Aktuator nach dem vorstehenden Anspruch, bei der die Abdeckung (10) so ausgelegt ist, dass sie an einem Körper aus elektrisch leitendem Material (3), insbesondere aus Metall, befestigt werden kann, der das bewegliche Element aufnimmt.

4. Aktuator nach einem der vorstehenden Ansprüche, wobei das leitfähige Sensorelement (15) eine Zwischenwelle ist, die ein Zwischenzahnrad (16) eines Betätigungsmechanismus (7) des beweglichen Elements trägt.

5. Aktuator nach einem der vorstehenden Ansprüche, wobei der Schutzpfad (25; 40) einen oder mehrere zusätzliche leitfähige Schutzstäbe (28; 41) umfasst.

6. Aktuator nach einem der vorstehenden Ansprüche, wobei der Sensor (20) ein Masseelement (29), insbesondere eine Masseklammer, umfasst, das mit der Masseleiste (23) verbunden ist, und der Schutzpfad (25) über einen Spalt (30) mit diesem Masseelement gekoppelt ist, so dass die Entladung vom Schutzpfad (25) über den Spalt (30) zu diesem Masseelement abgeleitet werden kann.

7. Aktuator nach einem der Ansprüche 1 bis 5, wobei der Schutzpfad (40) in elektrischem Kontakt mit der Masseleiste oder der Massestange steht, die mit dieser Masseleiste verbunden ist.

8. Aktuator nach dem vorstehenden Anspruch, wobei der Schutzpfad (40) einen Schutzstab (41) umfasst, der in elektrischem Kontakt mit dem mit dem Sensor verbundenen Massestab steht.

9. Aktuator gemäß einem der Ansprüche 2 bis 8, wobei die Abdeckung zwei elektrische Stifte (44) umfasst, um eine elektrische Verbindung zwischen einem dem elektromechanischen Aktuator zugeordneten Elektromotor (11) und einer Stromquelle, insbesondere einer Gleichstromquelle, herzustellen.

10. Elektromechanisches Ventil, insbesondere vom Typ Drosselklappe, mit einem Aktuator gemäß einem der vorstehenden Ansprüche.

## Claims

1. Electromechanical actuator (1) comprising:
- a conductive sensitive element (15) from which an undesirable electric arc, resulting in particular from static electricity, is preferentially formed,
- a sensor (20), in particular a position sensor arranged to detect a position of a movable part of the actuator, which is, for example, a movable flap (4), this sensor comprising an electrically conductive functional output tab (21) to be protected and connected to a conductive functional output bar (22), and a ground tab (23) connected to a ground bar (24), the output tab extended from its output bar extending between, on the one hand, the ground tab extended from its ground bar and, on the other hand, the sensitive conductive element, the electromechanical actuator (1) being **characterized in that** it comprises:
- an electrical protection path (25) arranged to divert any electrical discharge from the electric arc originating from the sensitive conductive element (15) towards the ground tab (23) so as to prevent this discharge from reaching the output tab and passing through the interior of the sensor (20),
- a gap (27) between the protection path (25) and the sensitive conductive element (15).

2. Actuator according to the previous claim, comprising a cover (10), made in particular of plastic, on which the sensor (20) and the electrical protection path (25) are placed.

3. Actuator according to the previous claim, in which the cover (10) is designed to be fixed to a body made of electrically conductive material (3), in particular metal, which houses the moving part.

4. Actuator according to one of the preceding claims, wherein the sensitive conductive element (15) is an intermediate shaft which carries an intermediate pinion (16) of an actuating mechanism (7) for the movable member.

5. Actuator according to one of the preceding claims, wherein the protective path (25; 40) comprises one or more additional conductive protective bars (28; 41).

6. Actuator according to one of the preceding claims, wherein the sensor (20) comprises a grounding member (29), in particular a grounding lug, connected to the ground tab (23), and the protective path (25) is coupled to this grounding member via a gap (30) so that the discharge can be evacuated from the protective path (25) to this grounding member by passing through the gap (30).

7. Actuator according to one of claims 1 to 5, wherein the protective path (40) is in electrical contact with the ground tab or the ground bar connected to this ground tab.

8. Actuator according to the previous claim, wherein the protective path (40) comprises a protective bar (41) in electrical contact with the ground bar connected to the sensor.

9. Actuator according to one of claims 2 to 8, wherein the cover comprises two electrical pins (44) for making an electrical connection between an electric motor (11) associated with the electromechanical actuator and an electrical power source, in particular a direct current source.

10. Electromechanical valve, in particular of the butterfly type, comprising an actuator according to one of the preceding claims.
